# EUROPÄISCHE PATENTSCHRIFT

(11) **EP 0 512 977 B1**
(45) Veröffentlichungstag und Bekanntmachung des Hinweises auf die Patenterteilung: **18.09.1996**
(21) Anmeldenummer: 92890101.6
(22) Anmeldetag: 28.04.1992
(51) Int. Cl.: D21C 9/153

(54) **Verfahren zum Bleichen von cellulosehältigem Material**
Process for bleaching cellulosic material
Procédé pour blanchir des matériaux contenant de la cellulose

(30) Priorität: 02.05.1991 AT 918/91
(43) Veröffentlichungstag der Anmeldung: 11.11.1992
(73) Patentinhaber: VOEST-ALPINE Industrieanlagenbau GmbH, A-4020 Linz (AT)
(72) Erfinder: Sinner, Michael, Dr., A-4020 Linz (AT); Schwarzl, Karl, Dr., A-4801 Mitterndorf (AT)
(74) Vertreter: Wolfram, Gustav, Dipl.-Ing.

(56) Entgegenhaltungen:
- EP-A- 0 397 308
- EP-A- 0 434 662
- EP-A- 0 442 254
- ABSTRACT BULLETIN OF THE INSTITUTE OF PAPER CHEMISTRY. Bd. 58, Nr. 5, November,1987,APPLETON US Seite 635; JOEL, A. R.:"Sorbozon process. Ozone generation with oxygen separation and recycle"

## Beschreibung

Die Erfindung betrifft ein Verfahren zum Bleichen von cellulosehältigem Material, insbesondere von Zellstoff, mit Ozon (O₃).

Bei der Bleiche von Zellstoff mit Ozon wird zunächst mittels eines Ozongenerators ein ozonhältiges Gas erzeugt. Geht man dabei von Sauerstoff aus und wendet eine stille elektrische Entladung zur Bildung von Ozon an, so kann man Konzentrationen von 100 bis 130 g O₃/Nm³ Sauerstoff erreichen, wobei der Strombedarf dem O₃-Gehalt entsprechend ansteigt. Das ozonhältige Gas wird dem zu bleichenden Zellstoff in einem Mischer zugemischt oder in Form einer wässerigen Ozonlösung zum Einsatz gebracht.

In der nachveröffentlichten EP-A1-0 434 662 (Priorität: 22.12.89, Veröffentlichungstag: 26.06.91) wird ein Verfahren zum Bleichen von cellulosehältigen Materialien mittels Ozon beschrieben, wobei den in wässerigem Medium suspendierten Materialien eine Lösung von Ozon in einem wässerigen Medium (Starkwasser) mit einem Gehalt von 30 bis 300 gO₃ pro m³ wässerigen Mediums unter Druck zugeführt und mit ersterem Medium in einer Mischeinrichtung vermischt wird, worauf die Mischung durch ein Reaktionsgefäß geleitet, das gebleichte Material von der Bleichflotte getrennt, und eventuell vorhandenes Restozon vernichtet wird.

Gemäß der ebenfalls nachveröffentlichten EP-A1-0 442 254 (Priorität: 14.02.90, Veröffentlichungstag: 21.08.91) wird zur Herstellung einer ozonhältigen, wässerigen Lösung, gegebenenfalls neben der Gewinnung eines Gases mit erhöhtem Ozongehalt, eine wässerige Lösung in einem Absorptionsgefäß mit einem ozonhältigen Gas unter Druck behandelt, welches ozonhältige Gas in einem Ozongenerator durch stille elektrische Entladung in Luft oder Sauerstoff erzeugt und auf einen Druck bis zu 10 bar verdichtet wurde, wobei in das ozonhältige Gas vor dessen Verdichtung eine unter Druck stehende, ozonhältige wässerige Lösung entspannt wurde, sodaß Ozon an das ozonhältige Gas abgegeben und ein Gas mit erhöhtem Ozongehalt (Starkgas) gebildet wird.

Wendet man eine Zellstoffdichte von 1 bis 20 % an, so spricht man von einer Nieder- bzw. Mittelkonsistenzbleiche, wendet man den Zellstoff in einer höheren Stoffdichte von mehr als 20 % an, so spricht man von einer Hochkonsistenzbleiche.

Bei den am häufigsten angewendeten Mittelkonsistenzbleichen mit Stoffdichten von etwa 10 % kann man im Fall der Ozonbleiche nicht beliebig viel O₃/t Zellstoff einsetzen, auch dann nicht, wenn das Bleichgas unter Druck dem Mischer zugeführt wird; äußerstenfalls kann eine Ozonmenge von 3 bis 4 kg O₃/t Zellstoff eingesetzt werden, weil die Gasmenge, die man in einem Mischer dem Zellstoff beimischen kann, begrenzt ist.

Bei der Einwirkung des ozonhältigen Bleichgases auf die zu bleichenden Materialien reagiert nicht der Sauerstoff, sondern nur das enthaltene Ozon. Der Sauerstoff verläßt am Ende des Bleichvorganges das Bleichgefäß und enthält nun allerdings verschiedene Verunreinigungen, wie Kohlenmonoxid, Kohlendioxid sowie Kohlenwasserstoffe und andere unerwünschte Bestandteile. In dieser verunreinigten Form kann der vom Bleichgefäß kommende Sauerstoff nicht mehr zur Gewinnung von Ozon verwendet werden, sondern muß entweder verworfen oder einer aufwendigen Reinigung unterzogen werden.

Bei der beschriebenen Arbeitsweise ist ein hoher Sauerstoff- und Strombedarf gegeben; auch die erreichte Bleichwirkung ist nicht immer befriedigend.

Die Erfindung bezweckt die Vermeidung der beschriebenen Nachteile und Schwierigkeiten und stellt sich die Aufgabe,
1) das Gesamtverfahren: Ozonerzeugung und Bleichung so zu führen, daß der Sauerstoff, aus dem die O₂/O₃-Mischung hergestellt wird, nicht mit der Bleichflotte in Berührung kommt, so daß er nach Trocknung unmittelbar für eine neuerliche Ozonbereitung verwendet werden kann;
2) die Menge des eingesetzten Sauerstoffes gegenüber der bisherigen Arbeitsweise entscheidend zu verringern, und
3) gewünschtenfalls die in die Bleichflotte einzubringende Ozonmenge pro Tonne Zellstoff zu erhöhen.

Damit im Zusammenhang soll auch die Bleichwirkung verbessert werden. Weiters soll das Verfahren sowohl für eine Nieder-als auch für eine Mittel- bzw. Hochkonsistenzbleiche einsetzbar sein.

Diese Aufgaben werden erfindungsgemäß durch die Kombination der Maßnahmen gelöst:
a) daß ein ozonhältiges Gas in einem Ozongenerator durch stille elektrische Entladung in Luft oder Sauerstoff erzeugt wird,
b) daß das ozonhältige Gas verdichtet und in einem Absorptionsgefäß unter Druck eine wässerige, an Ozon angereicherte Lösung (Starkwasser) gewonnen wird, wobei das im Absorptionsgefäß anfallende ozonarme sauerstoffhältige Gas nach Trocknung dem Ozongenerator zugeführt wird,
c) daß das Starkwasser in einer Entspannungszone entspannt wird, wobei ein Gas mit hohem O₃-Gehalt (Starkgas) freigesetzt wird,
d) das Starkgas mit ozonfreiem bzw. sauerstoffarmem Gas verdünnt wird,
e) das erhaltene Gas mit den zu bleichenden Materialien vermischt und in einer Bleichzone umgesetzt wird,
f) die gebleichte Materialsuspension entgast, das Festmaterial gewaschen und aufgearbeitet wird.

Der Ozongehalt in der nach a) hergestellten O₂/O₃-Mischung kann erfindungsgemäß 30 bis 130 g O₃/Nm³ betragen. Dieser Gehalt hängt von der erwünschten Bleichwirkung und von wirtschaftlichen Überlegungen ab. Soll die dem Zellstoff beizumischende Ozonmenge gegenüber dem bisherigen Ozonzusatz auf 4,5 bis 8 kg O₃/t Zellstoff gesteigert werden, so wird man im Ozongenerator ein ozonhältiges Gas an der oberen Grenze von 130 g O₃/Nm³ gewinnen. Reicht es aus, den Ozonzusatz niedriger zu halten, so wird man im Ozongenerator ein Gas an der unteren Grenze des Bereiches herstellen, was den Vorteil hat, daß der Strombedarf geringer ist.

Die Verdichtung des ozonhältigen Gases und die Gewinnung der wässerigen Lösung (Starkwasser) in einem Absorptionsgefäß kann bei einem Druck von 7 bis 10 bar erfolgen. Das Starkwasser kann 200 bis 350 g O₃/m³ enthalten, wobei hier auch eine Temperaturabhängigkeit besteht.

Das in der Entspannungszone nach c) erhaltene Gas mit erhöhtem O₃-Gehalt enthält mehr als 100 g O₃/Nm³, in der Regel im Bereich von 200 bis 250 g O₃/Nm³; es wird mit ozonfreiem bzw. sauerstoffarmem Gas verdünnt, wobei unter sauerstoffarmem Gas ein solches zu verstehen ist, das nicht mehr Sauerstoff aufweist als Luft. Die Verdünnung muß jedenfalls so weit gehen, daß eine Zersetzungsgefahr, die oberhalb von 250 g O₃/Nm³ auftreten würde, vermieden wird; in der Regel wird das Gas auf einen Gehalt von 100 bis 180 g O₃/Nm³, vorzugsweise von 100 bis 150 g O₃/Nm³ eingestellt.

Mit dem erfindungsgemäßen Verfahren gelingt es, die Einsatzmenge von Ozon bei der Mittelkonsistenzbleiche unter Verwendung von mechanischen Mischern und gasförmigem Ozon auf 4 bis 8 kg O₃/g des zu bleichenden Materials zu erhöhen.

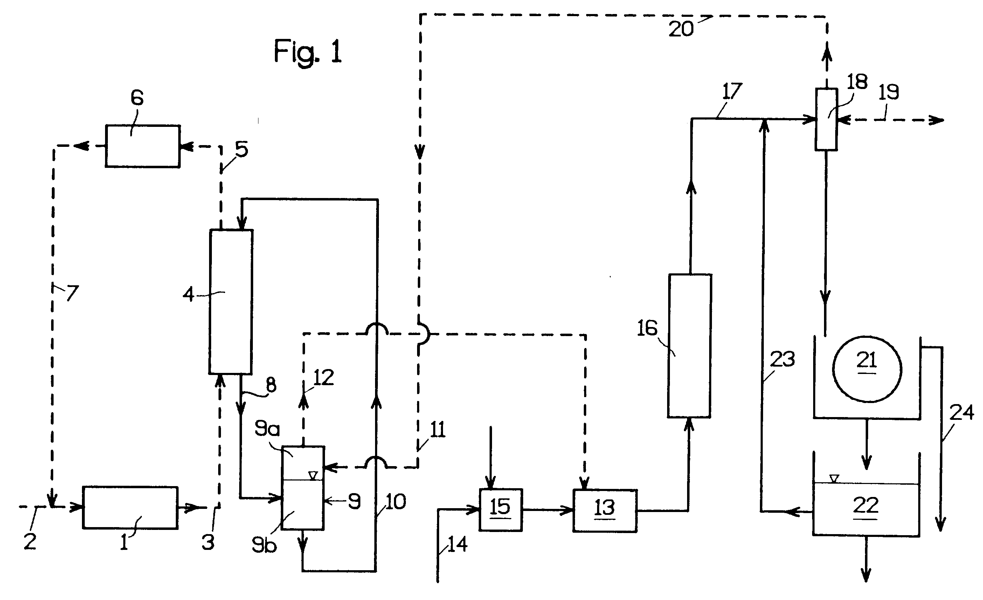

Eine Ausführungsform des erfindungsgemäßen Verfahrens, welche in erster Linie für Stoffdichten von 1 bis 20 %, welche noch pumpbar sind, in Frage kommt, ist in dem Schema nach Fig. 1 näher erläutert.

Ein modifiziertes Verfahren zur Herstellung von cellulosehältigem Material, insbesondere Zellstoff, für eine Hochkonsistenzbleiche, welches für Stoffdichten von mehr als 20 % bevorzugt wird, ist gekennzeichnet durch die Maßnahmen:
a) daß ein ozonhältiges Gas in einem Ozongenerator durch stille elektrische Entladung in Luft oder Sauerstoff erzeugt wird,
b) daß das ozonhältige Gas verdichtet und in einem Absorptionsgefäß unter Druck eine wässerige, an Ozon angereicherte Lösung (Starkwasser) gewonnen wird, wobei das im Absorptionsgefäß anfallende ozonarme sauerstoffhältige Gas nach Trocknung dem Ozongenerator zugeführt wird,
c) daß das Starkwasser in einer Entspannungszone entspannt wird, wobei ein Gas mit hohem O₃-Gehalt (Starkgas) freigesetzt wird,
d) das Starkgas mit ozonfreiem bzw. sauerstoffarmem Gas verdünnt wird, vorzugsweise auf einen Ozongehalt von 40 bis 60 g O₃/Nm³,
e) das erhaltene Gas mit der zu bleichenden Materialsuspension, die eine Stoffdichte von mehr als 20 % aufweist, vermischt, und in einer Bleichzone umgesetzt wird,
f) das Abgas aus der Bleichzone zur Entspannungszone rückgeführt und als Verdünnungsgas verwendet wird.
g) die gebleichte Materialsuspension gewaschen und aufgearbeitet wird.

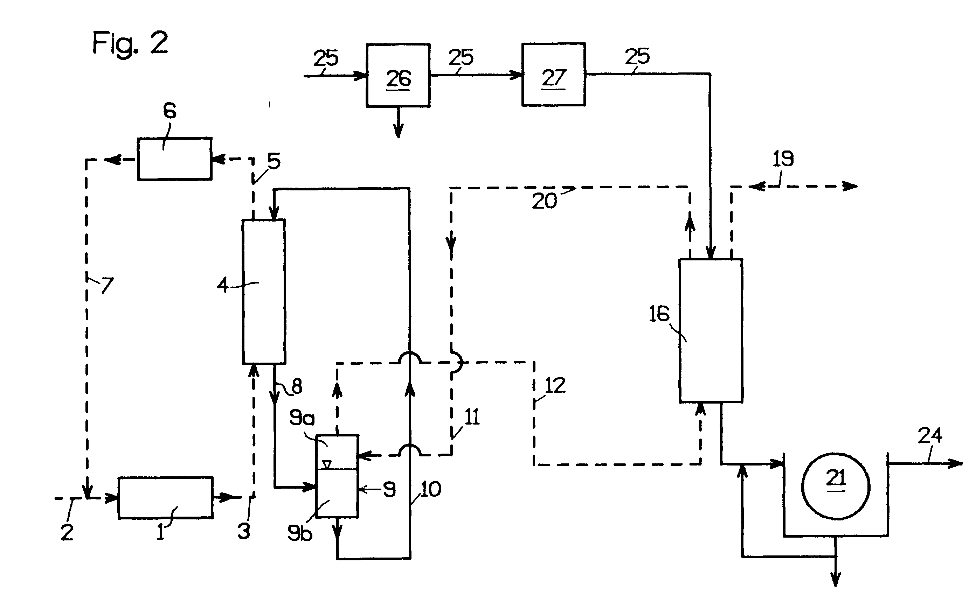

Die Maßnahmen a) bis e) stimmen mit jenen der ersten Ausführungsform überein; jedoch wird der O₃-Gehalt bei der Verdünnung stärker herabgesetzt, um Faserschädigungen zu vermeiden. Es fehlt auch eine eigene Entgasungsstation nach der Bleiche, sondern das Abgas aus der Bleiche wird direkt als Verdünnungsgas rückgeführt. Diese Verfahrensvariante ist im Schema nach Fig. 2 näher erläutert.

Die Erfindung umfaßt auch eine Anlage zur Durchführung der Verfahren, mit einem Ozongenerator, einer Absorptionskolonne und einem Trockner, die gasleitungsmäßig miteinander verbunden sind, einem Entspannungsgefäß, welches einen Flüssigkeitsraum und einen Gasraum aufweist, wobei der Flüssigkeitsraum durch eine Leitung mit der Absorptionskolonne zur Zuführung von ozonhältiger Lösung und mit einer Rückleitung zur Rückführung von Rückwasser mit der Absorptionskolonne verbunden ist, einem Bleichturm bzw. Bleichreaktor, der mit einer Zuführungsleitung zur Zuführung des zu bleichenden Materials und mit einer Abführung für das gebleichte Material versehen ist, welche Anlage dadurch gekennzeichnet ist, daß der Bleichturm bzw. Bleichreaktor durch eine Abgasrückführung mit dem Gasraum des Entspannungsgefäßes verbunden ist, durch welche Abgasrückführung ozonfreies bzw. sauerstoffarmes Gas als Verdünnungsgas dem Gasraum zuführbar ist.

Gemäß einer bevorzugten Ausführungsform ist der Bleichreaktor mit einer Entgasungs- bzw. Druckregelstation verbunden.

Die Erfindung wird in den beiliegenden Schemata (Fig. 1, Fig. 2) näher erläutert.

Im Schema nach Fig. 1 - in welchem strichliert die gasführenden Leitungen und voll ausgezogen die wässerige Lösungen bzw. Suspensionen führenden Leitungen gezeichnet sind - ist mit 1 der Ozongenerator bezeichnet, dem Sauerstoff durch die Leitung 2 zugeführt wird. Eine erhaltene O₂/O₃-Mischung mit einem Gehalt von beispielsweise 50 bis 100 g O₃/Nm³ Sauerstoff wird auf einen Druck von 7 bis 10 bar verdichtet und über die Leitung 3 in die Absorptions-(Wasch-)kolonne 4 geleitet. Dort wird das Ozon durch zirkulierendes Wasser aus dem Sauerstoff ausgewaschen und geht in Lösung.

Der nicht gelöste Sauerstoff wird über die Leitung 5 dem Trockner 6 und von dort durch die Leitung 7 dem Ozongenerator wieder zugeführt. Sauerstoff kommt also in diesem Kreis des Verfahrens nur mit reinem Wasser in Berührung und wird deshalb nicht verunreinigt.

Die unter Druck hergestellte wässerige Ozonlösung (Starkwasser) wird von der Absorptionskolonne 4 durch die Leitung 8 dem Entspannungsgefäß 9 zugeleitet, das drucklos arbeitet. Da die Löslichkeit des Ozon im drucklosen Zustand niedriger ist als unter Druck, kommt es zu einem Ausgasen von Ozon und Sauerstoff aus der Lösung.

Da die Löslichkeit des Sauerstoffes geringer ist als die Löslichkeit des Ozons im Wasser, entsteht im Gasraum 9a des Entspannungsgefäßes ein hochkonzentriertes Ozongas, wie es mit den derzeitigen Ozongeneratoren nicht hergestellt werden kann. Der Ozongehalt im Gasraum 9a des Entspannungsgefäßes kann bis zu 250 g O₃/Nm³ betragen. Oberhalb dieses Gehaltes besteht allerdings bereits die Gefahr einer explosiven Zersetzung, so daß dafür Sorge getragen werden muß, daß in den Gasraum 9a des Entspannungsgefäßes ein Verdünnungsgas durch die Leitung 11 zugeführt wird, um den Ozongehalt beispielsweise auf einen Gehalt von 200 g/Nm³ oder weniger herabzusetzen. Jedenfalls soll aber der Ozongehalt mehr als 100 g/Nm³ betragen, um die gewünschte Bleichwirkung ausüben zu können. Rückwasser aus der Entspannungszone 9 wird durch die Leitung 10 in die Waschkolonne 4 zurückgeführt.

Das verdünnte Gas wird aus der Entspannungszone 9 durch die Leitung 12 abgezogen und dem Mischer 13 zugeführt. Zu diesem Mischer 13 führt die Leitung 14 für die zu bleichende Materialsuspension, die in einem Mischer 15 vorgemischt und auf einen sauren pH-Wert von pH 4 oder weniger eingestellt wird. Diese vorgemischte Suspension wird im Mischer 13 mit dem aus der Leitung 12 kommenden Bleichgas vermischt. Vorteilhaft weist das Bleichgas hier eine Konzentration von 100 bis 150 g O₃/Nm³ auf.

Die eigentliche Bleichung, d.h. die Umsetzung des Bleichgases mit der Materialsuspension, erfolgt im Bleichturm 16 bei einer Einwirkungsdauer von 5 bis 10 min. Vom Bleichturm 16 gelangt die Suspension, d.h. das Gemisch aus Materialsuspension und Bleichgas, über die Leitung 17 in die Druckregelungszone 18, in welcher ozonfreies bzw. ozonarmes Gas freigesetzt wird. In dieser Entgasungszone wird über die Leitung 19 Luft eingeschleust.

Das Luft/Sauerstoff-Gemisch wird über die Leitungen 20 und 11 dem Gasraum 9a der Entspannungszone 9 als Verdünnungsgas zugeführt. Auf diese Weise wird der Sauerstoffgehalt des Bleichgases in dem Kreislauf zwischen Entspannungszone, Bleichturm und Abgasrückführung herabgesetzt; die Einsparung an Sauerstoff kann bis zu 80 % betragen, verglichen mit der früheren Arbeitsweise.

Die aus der Druckregelungszone abgezogene Zellstoffsuspension wird im Waschfilter 21 gewaschen, das dabei entstehende Abwasser 22 wird als Verdünnungswasser durch die Leitung 23 der die gebleichte Suspension führenden Leitung 17 vor der Druckregelungszone zugeführt. Der gebleichte Zellstoff wird durch die Leitung 24 abgeführt.

In dem Verfahrensschema nach Fig. 2 sind gleiche Anlagenteile mit den gleichen Bezugszeichen bezeichnet, so der Ozongenerator mit 1, die Sauerstoffzuführleitung mit 2, die O₂/O₃-Leitung mit 3, die Waschkolonne mit 4, die Sauerstoffrückleitung mit 5 und der Trockner mit 6, so daß dieser Kreislauf Übereinstimmt mit dem nach Fig. 1. Ebenso ist die von der Waschkolonne 4 kommende Ozonlösung mit 8, die Entspannungszone mit 9 und der Gasraum dieser Zone mit 9a bezeichnet.

In gleicher Weise, wie in Verbindung mit Fig. 1 beschrieben, wird das Rückwasser aus der Entspannungszone durch die Leitung 10 zur Waschkolonne rückgeführt. Auch dieser Kreis stimmt mit dem gemäß Fig. 1 beschriebenen überein.

Im Gasraum 9a der Entspannungszone wird das ausgegaste Ozon verdünnt, wobei das Verdünnungsgas aus der Leitung 11 kommt, und durch die Leitung 12 direkt in den Bleichreaktor 16 geführt. In gleicher Weise wie bei der ersten Ausführungsform wird auch hier durch die Zuführung des Verdünnungsgases Sauerstoff eingespart.

Der Weg des zu bleichenden Materials geht über die Leitung 25 zur Presse 26, wo das Material auf die gewünschte Konzentration, z.B. auf eine Stoffdichte von mehr als 20 %, eingestellt wird. Anschließend wird das Material dem Fluffer 27 zugeführt, wo Flocken hergestellt werden. Diese Flocken gehen weiter durch die Leitung 25 in den Bleichreaktor, der mit entsprechenden Ein- und Auslaßöffnungen versehen ist.

Das den Bleichreaktor verlassende gebleichte Material wird am Waschfilter 21 verdünnt und zur Zellstoffwäsche geführt. Über ein mit dem Bleichreaktor 16 verbundenes Druckregelsystem kann Luft 19 dem System zusätzlich zugeführt werden. Es kann aber auch Abgas aus dem System entfernt werden, wenn der Gasbedarf für die Verdünnung niedriger wird als der Gasanfall. Abgas aus dem Bleichreaktor wird durch die Leitung 20 und die Leitung 11 als Verdünnungsgas zugeführt.

Bei der Hochkonsistenzbleiche, wie in dem Schema nach Fig. 2 beschrieben, arbeitet man in der Regel mit einem niedrigeren Ozongehalt des Bleichgases, vorzugsweise mit einem Ozongehalt von 40 bis 60 g O₃/Nm³ Sauerstoff, um eine Faserschädigung gering zu halten.

Bei der Durchführung des erfindungsgemäßen Verfahrens ergeben sich charakteristischerweise die folgenden Mengenkennwerte:

Zur Herstellung von 1.000 g Ozon mit einer Konzentration von 100 g O₃/Nm³ benötigt man 15.000 g Sauerstoff. Unter Einrechnung geringer Verluste werden zur Erzeugung des O₂/O₃-Gemisches im O₃-Generator tatsächlich 15.500 g Sauerstoff benötigt, um 1.000 g Ozon zu erzeugen, wobei die Menge an Sauerstoff laufend ergänzt wird.

Aus der Absorptionskolonne erhält man Starkwasser mit 200 g O₃/m³. Gleichzeitig lösen sich im Starkwasser unter den gegebenen Bedingungen 1.300 g Sauerstoff/m³. Wenn die Anlage im Dauerbetrieb ist, treten bei der Starkwasserentspannung in der Entspannungszone die gelösten Gase aus der Lösung aus, wobei 1.000 g Ozon und 1.300 g Sauerstoff frei werden, was insgesamt 2.300 g Sauerstoff entspricht.

Bei der Rückführung zum Ozongenerator ist der Sauerstoffeinsatz 15.500 g Sauerstoff und der Sauerstoffverbrauch 2.300 g. Es verbleiben daher 13.200 g Sauerstoff, die rückgeführt werden. Da bei der Aufarbeitung des Sauerstoffes noch mit geringen Verlusten gerechnet werden muß, wird die Menge um 5 % verringert, so daß die rückgeführte Sauerstoffmenge daher 12.540 g oder 80,9 % der eingesetzten Menge beträgt.

Im Dauerbetrieb werden für die Erzeugung von 1.000 g Ozon 2.960 g frischer Sauerstoff zugeführt. In der Entspannungskolonne entsteht eine Gasmischung, die aus 1.000 g Ozon und aus 1.300 g Sauerstoff besteht. Durch Zuführen von Luft bzw. Abgas wird der Ozongehalt des Gases auf den gewünschten Ozonkonzentrationswert eingestellt. Der zum Ozongenerator rückgeführte Sauerstoff braucht nur noch getrocknet zu werden, da er sonst keine Verunreinigungen enthält.

## Patentansprüche

1. Verfahren zum Bleichen von cellulosehältigem Material mit Ozon (O₃) durch die Kombination der Maßnahmen:
a) daß ein ozonhältiges Gas in einem Ozongenerator durch stille elektrische Entladung in Luft oder Sauerstoff erzeugt wird,
b) daß das ozonhältige Gas verdichtet und in einem Absorptionsgefäß unter Druck eine wässerige, an Ozon angereicherte Lösung (Starkwasser) gewonnen wird, wobei das im Absorptionsgefäß anfallende ozonarme sauerstoffhältige Gas nach Trocknung dem Ozongenerator zugeführt wird,
c) daß das Starkwasser in einer Entspannungszone entspannt wird, wobei ein Gas mit hohem O₃-Gehalt (Starkgas) freigesetzt wird,
d) das Starkgas mit ozonfreiem bzw. sauerstoffarmem Gas verdünnt wird,
e) das erhaltene Gas mit den zu bleichenden Materialien vermischt und in einer Bleichzone umgesetzt wird,
f) die gebleichte Materialsuspension entgast, das Festmaterial gewaschen und aufgearbeitet wird.

2. Verfahren nach Anspruch 1, dadurch gekennzeichnet, daß das bei der Entgasung der Materialsuspension erhaltene ozonfreie bzw. ozonarme Abgas zur Entspannungszone rückgeführt und als Verdünnungsgas verwendet wird.

3. Verfahren nach Anspruch 1 oder 2, dadurch gekennzeichnet, daß das in der Entspannungszone erhaltene ozonfreie bzw. ozonarme Wasser als Rückwasser der Absorptionskolonne rückgeführt wird.

4. Verfahren nach einem oder mehreren der Ansprüche 1 bis 3, dadurch gekennzeichnet, daß das Waschwasser aus der Waschzone als Verdünnungswasser der gebleichten Materialsuspension vor ihrer Entgasung zugeführt wird.

5. Verfahren nach einem oder mehreren der Ansprüche 1 bis 4, dadurch gekennzeichnet, daß die Verdünnung des Starkgases mit Verdünnungsgas, insbesondere Abgas, auf einen Gehalt von 100 bis 180 O₃ g/Nm³ vorgenommen wird, vorzugsweise auf einen Gehalt von 100 bis 150 O₃ g/Nm³.

6. Verfahren nach einem oder mehreren der Ansprüche 1 bis 5, dadurch gekennzeichnet, daß die Umsetzungsdauer des zu bleichenden Materials mit dem ozonhältigen Gas 5 bis 10 min beträgt.

7. Verfahren nach einem oder mehreren der Ansprüche 1 bis 6, dadurch gekennzeichnet, daß die Einsatzmenge von Ozon im Mittelkonsistenzbereich bei Verwendung von mechanischen Mischern bis 8 kg/t des zu bleichenden Materials beträgt.

8. Verfahren nach einem oder mehreren der Ansprüche 1 bis 7, dadurch gekennzeichnet, daß die Materialsuspension vor Vermischung mit dem ozonhältigen Gas auf einen pH-Wert von etwa 4 bzw. darunter eingestellt wird.

9. Verfahren nach einem oder mehreren der Ansprüche 1 bis 8, dadurch gekennzeichnet, daß die Stoffdichte des zu bleichenden Materials 1 bis 20 % beträgt.

10. Verfahren nach einem oder mehreren der Ansprüche 1 bis 9, dadurch gekennzeichnet, daß im Ozongenerator ein Gas mit 30 bis 130 g Ozon/Nm³ erzeugt wird.

11. Verfahren nach Anspruch 10, dadurch gekennzeichnet, daß das ozonhältige Gas auf einen Druck bis zu 10 bar verdichtet wird.

12. Verfahren nach Anspruch 1, dadurch gekennzeichnet, daß
in Schritt d) das Starkgas mit ozonfreiem bzw. sauerstoffarmem Gas vorzugsweise auf einen Ozongehalt von 40 bis 60 g O₃/Nm³ verdünnt wird,
in Schritt e) das erhaltene Gas mit der zu bleichenden Materialsuspension, die eine Stoffdichte von mehr als 20 % aufweist, vermischt, und in einer Bleichzone umgesetzt wird, sowie durch die zusätzlichen Schritte
f) daß das Abgas aus der Bleichzone zur Entspannungszone rückgeführt und als Verdünnungsgas verwendet wird, und
g) daß die gebleichte Materialsuspension gewaschen und aufgearbeitet wird.

13. Anlage zur Durchführung der Verfahren nach den Ansprüchen 1 bis 12, mit einem Ozongenerator (1), einer Absorptionskolonne (4) und einem Trockner (6), die gasleitungsmäßig miteinander verbunden sind, einem Entspannungsgefäß (9), welches einen Flüssigkeitsraum und einen Gasraum (9a, 9b) aufweist, wobei der Flüssigkeitsraum durch die Leitung (8) mit der Absorptionskolonne (4) zur Zuführung von ozonhältiger Lösung und mit einer Rückleitung (10) zur Rückführung von Rückwasser mit der Absorptionskolonne (4) verbunden ist, einem Bleichturm bzw. Bleichreaktor (16), der mit einer Zuführungsleitung (14, 25) zur Zuführung des zu bleichenden Materials und mit einer Abführung für das gebleichte Material versehen ist, dadurch gekennzeichnet, daß der Bleichturm bzw. Bleichreaktor (16) durch eine Abgasrückführung (20) mit dem Gasraum des Entspannungsgefäßes verbunden ist, durch welche Abgasrückführung ozonfreies bzw. sauerstoffarmes Gas als Verdünnungsgas dem Gasraum (9a) zugeführt wird.

14. Anlage nach Anspruch 13, dadurch gekennzeichnet, daß der Bleichreaktor mit einer Entgasungs- bzw. Druckregelstation verbunden ist.

## Claims

1. A process for bleaching cellulosic materials using ozone (O₃) by combining the measures of:
a) producing an ozonic gas in an ozone generator by corona in air or oxygen,
b) compressing the ozonic gas and recovering an aqueous ozone-enriched solution (strong water) in an absorption vessel under pressure, the ozone-poor, oxygen-containing gas incurred in the absorption vessel being supplied to the ozone generator after drying,
c) depressurizing the strong water in a depressurizing zone, a gas having a high O₃ content (strong gas) being released,
d) diluting the strong gas with ozone-free or oxygen-poor gas, respectively,
e) mixing the gas obtained with the materials to be bleached and reacting it in a bleaching zone,
f) degassing the bleached material suspension, washing and processing the solid material.

2. A process according to claim 1, characterised in that the ozone-free or ozone-poor offgas obtained at the degassing of the material suspension is recycled to the depressurizing zone and is used as a dilution gas.

3. A process according to claim 1 or 2, characterised in that the ozone-free or ozone-poor water obtained in the depressurizing zone is recycled to the absorption column as return water.

4. A process according to one or several of claims 1 to 3, characterised in that the washings from the washing zone are supplied to the bleached material suspension as diluting water prior to degassing thereof.

5. A process according to one or several of claims 1 to 4, characterised in that dilution of the strong gas with dilution gas, in particular offgas, is carried out to a content of from 100 to 180 O₃ g/Nm³, preferably to a content of from 100 to 150 O₃ g/Nm³.

6. A process according to one or several of claims 1 to 5, characterised in that the reaction of the material to be bleached with the ozonic gas takes place for 5 to 10 minutes.

7. A process according to one or several of claims 1 to 6, characterised in that the amount of ozone supplied in the medium consistency range when using mechanic mixers is up to 8 kg/t of the material to be bleached.

8. A process according to one or several of claims 1 to 7, characterised in that the material suspension is adjusted to a pH of about 4 or therebelow, prior to mixing with the ozonic gas.

9. A process according to one or several of claims 1 to 8, characterised in that the consistency of the material to be bleached is 1 to 20 %.

10. A process according to one or several of claims 1 to 9, characterised in that a gas containing 30 to 130 g ozone/Nm³ is produced in the ozone generator.

11. A process according to claim 10, characterised in that the ozonic gas is compressed to a pressure of up to 10 bar.

12. A process according to claim 1, characterised in that
in step d) the strong gas is diluted with ozone-free or oxygen-poor gas, respectively, preferably to an ozone content of from 40 to 60 g O₃/Nm₃,
in step e) the obtained gas is mixed with the material suspension to be bleached, which has a consistency of more than 20%, and is reacted in a bleaching zone, as well as by the additional steps
f) that the offgas from the bleaching zone is recycled to the depressurizing zone and used as diluting gas, and
g) that the bleached material suspension is washed and processed.

13. A plant for carrying out the process according to claims 1 to 12, with an ozone generator (1), an absorption column (4) and a drier (6) which are interconnected in terms of gas ducts, a depressurizing vessel (9) including a liquid volume and a gas volume (9a, 9b), the liquid volume being connected with the absorption column (4) by the duct (8) for supplying ozonic solution, and being connected with the absorption column by means of a return duct (10) for recycling return water, a bleaching tower or bleaching reactor (16), respectively, provided with a supply duct (14, 25) for supplying the material to be bleached, and with a discharge duct for the bleached material, characterised in that the bleaching tower or bleaching reactor (16), respectively, is connected with the gas volume of the depressurizing vessel by an offgas recirculating means (20) through which ozone-free or ozone-poor gas, respectively, is supplied to the gas volume (9a) as dilution gas.

14. A plant according to claim 13, characterised in that the bleaching reactor is connected with a degassing and pressure control station, respectively.

## Revendications

1. Procédé de blanchiment d'un matériau contenant de la cellulose avec de l'ozone (O₃) par la combinaison des mesures :
a) consistant en ce qu'on produit un gaz contenant de l'ozone dans un générateur d'ozone par décharge électrique silencieuse dans de l'air ou de l'oxygène,
b) en ce qu'on comprime le gaz contenant de l'ozone et qu'on récupère dans une cuve d'absorption sous pression une solution aqueuse, enrichie en ozone (eau concentrée), le gaz contenant de l'oxygène, pauvre en ozone, produit dans la cuve d'absorption étant introduit après séchage dans le générateur d'ozone,
c) consistant en ce qu'on détend l'eau concentrée dans une zone de détente, un gaz présentant une teneur élevée en O₃ (gaz concentré) étant libéré,
d) le gaz concentré est dilué avec un gaz pauvre en oxygène ou exempt d'ozone,
e) le gaz obtenu est mélangé avec les matériaux à blanchir et réagit dans une zone de blanchiment,
f) la suspension du matériau blanchi est dégazée, le matériau solide lavé est utilisé à d'autres fins.

2. Procédé selon la revendication 1, caractérisé en ce qu'on recycle les gaz résiduaires, pauvres en ozone ou exempt d'ozone, produits lors du dégazage de la suspension du matériau, dans la zone de détente et qu'on les utilise en tant que gaz de dilution.

3. Procédé selon la revendication 1 ou 2, caractérisé en ce qu'on recycle dans la colonne d'absorption l'eau pauvre en ozone ou exempte d'ozone produite dans la zone de détente en tant qu'eau de recyclage.

4. Procédé selon l'une ou plusieurs quelconques des revendications 1 à 3, caractérisé en ce qu'on introduit l'eau de lavage provenant de la zone de lavage en tant qu'eau de dilution dans la suspension de matériau blanchi avant son dégazage.

5. Procédé selon l'une ou plusieurs quelconques des revendications 1 à 4, caractérisé en ce qu'on réalise la dilution du gaz concentré avec du gaz de dilution, en particulier avec des gaz résiduaires, à une teneur de 100 à 180 g de O₃/Nm³, de préférence à une teneur de 100 à 150 g de O₃/Nm³.

6. Procédé selon ou plusieurs quelconques des revendications 1 à 5, caractérisé en ce que la durée de réaction du matériau à blanchir avec le gaz contenant de l'ozone est de 5 à 10 min.

7. Procédé selon l'une ou plusieurs quelconques des revendications 1 à 6, caractérisé en ce que la quantité d'ozone utilisée dans le domaine de consistance moyenne lors de l'utilisation de mélangeurs mécaniques va jusqu'à 8kg/t du matériau à blanchir.

8. Procédé selon l'une ou plusieurs quelconques des revendications 1 à 7, caractérisé en ce qu'on ajuste la suspension du matériau avant le mélange avec le gaz contenant de l'ozone à une valeur de pH d'environ 4 ou inférieure;

9. Procédé selon l'une ou plusieurs quelconques des revendications 1 à 8, caractérisé en ce que la consistance du matériau à blanchir est de 1 à 20 %.

10. Procédé selon l'une ou plusieurs quelconques des revendications 1 à 9, caractérisé en ce qu'on produit dans le générateur d'ozone un gaz avec de 30 à 130 g d'ozone/Nm³.

11. Procédé selon la revendication 10, caractérisé en ce qu'on comprime le gaz contenant de l'ozone à une pression allant jusqu'à 10 bar.

12. Procédé selon la revendication 1, caractérisé en ce que
dans l'étape d) on dilue le gaz concentré avec du gaz pauvre en oxygène ou exempt d'ozone de préférence à une teneur en ozone de 40 à 60 g de O₃/Nm³,
dans l'étape e) on mélange le gaz obtenu avec la suspension du matériau à blanchir, qui présente une consistance supérieure à 20 % et qu'on le fait réagir dans une zone de blanchiment, ainsi que par les étapes supplémentaires
f) on recycle les gaz résiduaires provenant de la zone de blanchiment dans la zone de détente et qu'on les utilise en tant que gaz de dilution, et
g) on lave la suspension du matériau blanchi et on l'utilise à d'autres fins.

13. Installation pour la réalisation du procédé selon les revendications 1 à 12 présentant un générateur d'ozone (1), une colonne d'absorption (4) et un sécheur (6), qui sont reliés les uns aux autres par des canalisations de gaz, une cuve de détente (9), laquelle présente un espace pour le liquide et un espace pour le gaz (9a, 9b), l'espace pour le liquide étant relié par l'intermédiaire de la canalisation (8) avec la colonne d'absorption (4) pour introduction d'une solution contenant de l'ozone et avec une canalisation de recyclage (10) pour le recyclage d'eau de recyclage à la colonne d'absorption (4), une tour de blanchiment ou un réacteur de blanchiment (16) qui est muni d'une canalisation d'alimentation (14, 25) pour l'introduction du matériau à blanchir et d'une évacuation pour le matériau blanchi, caractérisée en ce que la tour de blanchiment ou le réacteur de blanchiment (16) est relié à l'espace pour le gaz de la cuve de détente par l'intermédiaire d'un recyclage des gaz résiduaires (20), par l'intermédiaire duquel recyclage des gaz résiduaires on introduit du gaz exempt d'ozone ou pauvre en oxygène en tant que gaz de dilution dans l'espace pour le gaz (9a).

14. Installation selon la revendication 13, caractérisé en ce que le réacteur de blanchiment est relié à une station de régulation de pression ou de dégazage.
